(19) **Europäisches Patentamt / European Patent Office / Office européen des brevets**

(11) **EP 4 589 333 A1**

(12) **EUROPEAN PATENT APPLICATION**
published in accordance with Art. 153(4) EPC

(43) Date of publication:
**23.07.2025   Bulletin 2025/30**

(21) Application number: **23944526.5**

(22) Date of filing: **29.12.2023**

(51) International Patent Classification (IPC):
**G01S 7/41** (2006.01)     **G01S 13/02** (2006.01)
**G06F 17/16** (2006.01)     **G06F 17/18** (2006.01)

(52) Cooperative Patent Classification (CPC):
**G01S 7/41; G01S 13/02; G01S 13/42;
G01S 13/582; G01S 13/931; G06F 17/16;
G06F 17/18**

(86) International application number:
**PCT/CN2023/143609**

(87) International publication number:
**WO 2025/091688 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **01.11.2023   CN 202311444850**

(71) Applicant: **Calterah Semiconductor Technology
(Shanghai)
Co., Ltd.
Shanghai 201210 (CN)**

(72) Inventors:
• **CHEN, Yi
  Shanghai 201210 (CN)**
• **YU, Zengyu
  Shanghai 201210 (CN)**

(74) Representative: **Balder IP Law, S.L.
Paseo de la Castellana 93
5ª planta
28046 Madrid (ES)**

(54) **SIGNAL PROCESSING METHOD, STORAGE MEDIUM, RADAR CHIP, AND INTEGRATED CIRCUIT**

(57)     Embodiments of the present disclosure relate to the technical field of radar, and disclose a signal processing method, a storage medium, a radar chip, and an integrated circuit. The signal processing method including: transmitting detection signals in a Doppler division multiplexing (DDM) mode through a plurality of transmitting channels; processing echo signals to obtain range-Doppler two-dimensional data; calculating a plurality of probabilities of Doppler spectrums corresponding to transmitting channel orders of at least two targets under different aliasing combinations according to the range-Doppler two-dimensional data; and determining a Doppler spectrum of each of the at least two targets according to an aliasing combination corresponding to a maximum probability among the plurality of probabilities. In this way, it is possible to correctly recover the signal before Doppler spectrum aliasing in the presence of at least two targets.

| | |
|---|---|
| Transmit detection signals through multiple transmitting channels in a doppler division multiplexing mode | 501 |
| Perform signal processing on echo signals to obtain range-Doppler two-dimensional data | 502 |
| calculate a plurality of probabilities of Doppler spectrums corresponding to transmitting channel orders of at least two targets under different aliasing combinations according to the range-Doppler two-dimensional data | 503 |
| Determine a Doppler spectrum of each of the at least two targets according to an aliasing combination corresponding to a maximum probability among the plurality of probabilities | 504 |

FIG. 5

**Description**

**CROSS REFERENCE TO RELATED APPLICATIONS**

This application claims priority to Chinese Patent Application No. CN202311444850.6, filed on November 1, 2023, which is hereby incorporated by reference in its entirety.

**TECHNICAL FIELD**

The various embodiments described in this document relate in general to the field of radar technologies, and more specifically to a signal processing method, a storage medium, a radar chip, and an integrated circuit.

**BACKGROUND**

The radar is an electronic device that uses electromagnetic waves to detect targets. Specifically, the radar first emits electromagnetic waves to irradiate the target, and then receives an echo signal generated by reflection of the emitted electromagnetic waves off the target. Thus, it is possible to obtain, by processing and analyzing the echo signal, information such as a distance, a rate (radial velocity) of change of the distance, an azimuth, and an altitude from the target to an electromagnetic wave transmitting point.

During processing and analyzing of the echo signal, the echo signal is subjected to range-dimension Fourier transform and slow-time-dimension Fourier transform to obtain the Doppler spectrum, and then signal processing is performed according to the Doppler spectrum. However, in the presence of at least two targets, Doppler spectrum aliasing is easy to occur. If signals before aliasing could not be correctly recovered, the target could not be correctly detected.

Therefore, there is a need to correctly recover the signals before the Doppler spectrum aliasing in the presence of the at least two targets.

**SUMMARY**

Embodiments of the present disclosure provide a signal processing method, a storage medium, a radar chip, and an integrated circuit, which are at least advantageous for correctly recovering signals before Doppler spectrum aliasing in the presence of at least two targets.

Embodiments of the disclosure provide a signal processing method, including the following. Detection signals are transmitted in a Doppler division multiplexing (DDM) mode through a plurality of transmitting channels. Echo signals are processed to obtain range-Doppler two-dimensional data. A plurality of probabilities of Doppler spectrums corresponding to transmitting channel orders of at least two targets under different aliasing combinations are calculated according to the range-Doppler two-dimensional data. A Doppler spectrum of each of the at least two targets is determined according to an aliasing combination corresponding to a maximum probability among the plurality of probabilities.

In some embodiments, calculating the plurality of probabilities of the Doppler spectrums corresponding to the transmitting channel orders of the at least two targets under the different aliasing combinations according to the range-Doppler two-dimensional data is achieved as follows. All possible combinations of the transmitting channel orders of the at least two targets are traversed, and a probability corresponding to each of all the possible combinations is calculated to obtain the plurality of probabilities.

In some embodiments, traversing all the possible combinations of the transmitting channel orders of the at least two targets includes at least one of: traversing possible combinations of transmitting channel orders of two targets, and traversing possible combinations of transmitting channel orders of three targets.

In some embodiments, calculating the probability corresponding to each of all the possible combinations includes: for each respective possible combination of all the possible combinations, calculating, according to an energy matrix of each of the at least two targets and a superposition matrix corresponding to the respective possible combination, a least-square estimation of the energy matrix of each of the at least two targets corresponding to the respective possible combination; and calculating the probability corresponding to the respective possible combination according to the energy matrix, the superposition matrix, and the least-square estimation of the energy matrix of each of the at least two targets. The energy matrix is a matrix obtained according to energy of the echo signals in each of sub-bands of a corresponding Doppler spectrum corresponding to the respective possible combination. Each column of the superposition matrix corresponds to a superposition factor of a target of the at least two targets. Element values corresponding to transmitting channel orders of the target in the superposition factor are 1, and other element values in the superposition factor are 0.

In some embodiments, the least-square estimation of the energy matrix of each of the at least two targets corresponding to the respective possible combination is calculated according to a formula:

$$\left[\widehat{A_1}\ \widehat{A_2}\ ...\ \widehat{A_Q}\right] = (M^T M)^{-1} M^T \mathrm{P'}.$$

The probability corresponding to the respective possible combination is calculated according to a formula:

$$\mathrm{I} = -\frac{1}{L}\left\|\mathrm{P'} - m_1\,\widehat{A_1} - m_2\widehat{A_2}\cdots - m_Q\widehat{A_Q}\right\|$$

Q represents a number of targets, L represents a length of an unaliased spectral line in the corresponding Doppler spectrum, P' represents an unaliased energy matrix, and is an L*1 matrix, $\widehat{A_1}, \widehat{A_2}, \ldots, \widehat{A_Q}$ represents least-square estimation of the energy matrix of each of the targets, respectively, T denotes transpose, ()$^{-1}$ represents an inversion operation, M represents the superposition matrix and is an L*Q matrix, $m_1, m_2......m_Q$ represents the superposition factor of each of the targets, and $\|\cdots\|$ represents a modulus operation.

In some embodiments, the sub-bands of the corresponding Doppler spectrum are obtained by dividing according to a non-zero minimum phase step value of the plurality of transmitting channels relative to a reference transmitting channel, and the number of the sub-bands is larger than the number of transmitting antennas.

In some embodiments, the minimum phase step value is any one of 15°, 30°, 45°, and 60°.

In some embodiments, traversing all the possible combinations of the transmitting channel orders of the at least two targets includes: traversing all possible combinations of transmitting channel orders of each of 2, 3, ..., and the number of the sub-bands -1 targets.

In some embodiments, the method further includes the following. Before calculating the plurality of probabilities of the Doppler spectrums corresponding to the transmitting channel orders of the at least two targets under the different aliasing combinations according to the range-Doppler two-dimensional data, determining that the number of peaks of each of the Doppler spectrums is greater than the number of the plurality of transmitting channels.

Embodiments of the disclosure further provide a computer-readable storage medium, storing a computer program. The computer program which, when executed by a processor, causes the processor to implement the signal processing method described above.

Embodiments of the disclosure further provide a radar chip, including: at least one processor, and a memory communicatively connected to the at least one processor. The memory stores instructions executable by the at least one processor, and the instructions are executed by the at least one processor to cause the at least one processor to perform the signal processing method described above.

Embodiments of the disclosure further provide an integrated circuit, including a radio frequency module, an analog signal processing module, and a digital signal processing module connected in sequence. The radio frequency module is configured to transmit detection signals in a doppler division multiplexing (DDM) mode through a plurality of transmitting antennas, and to receive echo signals through a plurality of receiving antennas. The analog signal processing module is configured to perform down-frequency processing on the echo signals to obtain an intermediate frequency signal. The digital signal processing module is configured to perform analog-to-digital conversion on the intermediate frequency signal to obtain a digital signal, and to perform following processing on the digital signal: processing the echo signals to obtain range-Doppler two-dimensional data; calculating a plurality of probabilities of Doppler spectrums corresponding to transmitting channel orders of at least two targets under different aliasing combinations; and determining a Doppler spectrum of each of the at least two targets according to an aliasing combination corresponding to a maximum probability among the plurality of probabilities.

Embodiments of the disclosure provide a radio device, including a carrier, the integrated circuit provided on the carrier, and at least one antenna disposed on the carrier, or the at least one antenna and the integrated circuit are integrated into an integrated device disposed on the carrier. The integrated circuit is connected with the at least one antenna for transmitting detection signals and/or receiving echo signals.

Embodiments of the disclosure provide a terminal device, including: a device body, and the radio device disposed on the device body. The radio device is used for target detection to provide reference information for operation of the device body.

In the embodiments of the present disclosure, probabilities in different aliasing combination modes are estimated by an algorithm based on maximum likelihood estimation, and spectral lines of each of a plurality of targets are separated according to the combination of maximum probabilities, so that the signal before the aliasing of the target can be correctly recovered. This method does not require high hardware of a radio frequency system of the radar. The experiment proves that the accuracy of the solution is high, the amount of calculation is small, and this method has high engineering realization value.

## BRIEF DESCRIPTION OF THE DRAWINGS

One or more embodiments are illustrated by pictures in the accompanying drawings corresponding thereto, and these illustrative illustrations are not intended to limit the embodiments. Elements bearing the same reference numerals in the accompanying drawings are designated as similar elements, and the figures in the accompanying drawings are not intended to limit the scale unless otherwise stated.

FIG. 1 is a schematic structural diagram of a radar according to an embodiment of the present disclosure.

FIG. 2 is a typical phase diagram of a 4T4R radar according to an embodiment of the present disclosure.

FIG. 3 is a schematic diagram of a Doppler spectrum of a single target according to an embodiment of the present disclosure.

FIG. 4A is a schematic diagram of a Doppler spectrum of target 1 according to an embodiment of the present disclosure.

FIG. 4B is a schematic diagram of a Doppler spectrum of target 1 according to an embodiment of the present disclosure.

FIG. 4C is a schematic diagram of an aliased Doppler spectrum of target 1 shown in FIG. 4A and target 2 shown in FIG. 4B.

FIG. 5 is a flow chart of a signal processing method according to an embodiment of the present disclosure.

FIG. 6 is a schematic diagram of probabilities estimated corresponding to each of different combinations of transmitting channel orders in the case where a transmitting channel order of target 1 is $H_1$ and a transmitting channel order of target 2 is $H_2$.

FIG. 7 is a statistical schematic diagram of a calculation accuracy rate corresponding to different aliased combinations of transmitting channel orders between the targets when the energy difference between target 1 and target 2 is within 10 dB.

FIG. 8 is a schematic structural diagram of a radar chip according to an embodiment of the present disclosure.

FIG. 9 is a schematic structural diagram of an integrated circuit according to an embodiment of the present disclosure.

## DETAILED DESCRIPTION OF THE EMBODIMENTS

In order to make the purpose, technical solutions, and advantages of the embodiments of the present disclosure clearer, embodiments of the present disclosure will be described in detail below with reference to the accompanying drawings. However, one of ordinary skill in the art will appreciate that many technical details have been set forth in various embodiments of the present disclosure in order to better understand the present disclosure by the reader. However, even without these technical details and various changes and modifications based on the following embodiments, the technical solutions claimed in the present disclosure can be realized.

The following division of various embodiments is for convenience of description, and is not intended to limit the specific implementation of the present disclosure in any way, and the various embodiments may be combined with each other and referred to each other on the premise of without contradiction.

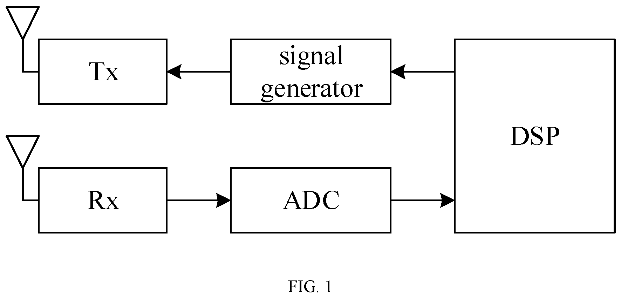

Millimeter-wave radar is a radar that operates in a millimeter-wave band for detection. A frequency band of the millimeter-wave radar is generally from 30GHz to 300GHz, and a wavelength of the millimeter-wave radar ranges from 1mm to 10mm. FIG. 1 is a schematic diagram of a radar structure. In FIG. 1, a signal generator is configured to generate electromagnetic waves of a specific modulation frequency, a transmitter Tx is configured to transmit the electromagnetic waves through an antenna, and a receiver Rx is configured to receive electromagnetic waves reflected back from a target through an antenna. The millimeter-wave radar can perform distance measurement/ranging, speed measurement, and azimuth measurement on each of multiple targets concurrently. The ranging is based on the Doppler effect. By calculating a frequency change of electromagnetic waves returning to a receiving antenna, a moving speed and flight time of the target relative to the radar are obtained, thereby obtaining a distance between the target and an electromagnetic wave transmitting point. The azimuth measurement (including a horizontal angle and a vertical angle) is to obtain an azimuth angle of the target relative to the transmitting point by calculating according to a phase difference of electromagnetic waves reflected by a same target received through an antenna array.

The signal generator includes, but is not limited to, an oscillator. For example, the oscillator may be a phase-locked loop including a phase detector, a low-pass filter, and a voltage-controlled oscillator. The phase detector is configured to detect a phase difference between an input signal and an output signal to generate a control voltage. The voltage-controlled oscillator is configured to adjust a frequency according to the control voltage, so that the phase-locked loop can provide a radio frequency signal where an input signal and an output signal are same. The oscillator is configured to provide the radio frequency signal to the transmitter Tx and the receiver Rx.

The transmitter Tx is connected to an antenna, e.g., a transmitting antenna, to form a transmitting channel. The transmitter is configured to perform power amplification on the radio frequency signal provided by the oscillator to obtain a transmitted signal, and to provide the transmitted signal to the transmitting antenna. The function of the transmitting antenna is to perform conversion of a waveguide field and a space radiation field, to convert the transmitted signal into a radar beam radiated to a surrounding environment.

The receiver Rx is connected to an antenna, e.g., a receiving antenna, to form a receiving channel. When there are obstacles in the surrounding environment, the receiving antenna can receive an echo of the radar beam. The function of the receiving antenna is to perform conversion of the space radiation field and the waveguide field to obtain an echo signal. The receiver is configured to mix the echo signal of the receiving channel with the radio frequency signal provided by the oscillator to generate a primary analog signal, and convert the primary analog signal into an analog input signal. The analog input signal is converted into a digital signal by an analog to digital converter (ADC).

A digital signal processor (DSP) includes a plurality of processing units and a storage unit configured to store intermediate data and/or result data. The plurality of processing units may be configured to perform at least some of following data processing processes: Fourier transform, signal processing, angle detection, and point cloud imaging. The Fourier transform may include a one-dimensional Fourier transform (e.g., 1D-FFT) and a two-dimensional Fourier transform (e.g., 2D-FFT). The digital signal processor is configured to perform signal processing and data processing on the echo signal, to obtain the result data such as a distance, a speed/velocity, and a direction of arrival (DOA) of the target.

The angular resolution, angular accuracy, angular robustness, and other indicators of the radar are directly related to the number of the receiving channels and an aperture of each of the receiving channels of the radar. Due to limitations of the radar size and the number of physical transmitting/receiving channels of the millimeter-wave radar chip, multiple-input multiple-output (MIMO) radars are generally used to expand the number of receiving channels and the aperture of each of the receiving channels. Since transmitted detection signals are different, signal processing methods of the MIMO radar include signal processing methods based on time division multiplexing (TDM), signal processing methods based on Doppler division multiplexing (DDM), and so on.

There are many kinds of modulation methods for millimeter-wave radar transmitted waves. Selecting appropriate modulation methods in different application scenarios can effectively improve system performance and reliability. The ranging/distance measurement technology of the frequency modulated continuous wave (FMCW) radar is a technology used in high-precision radar ranging. A transmitted wave of the FMCW radar is a high-frequency continuous wave, and a frequency of the transmitted wave of the FMCW radar changes with time according to a pattern of the triangular wave. Electromagnetic waves with continuously changing frequencies emitted by the FMCW radar are reflected by objects to form echoes. The echoes and the electromagnetic waves have a certain frequency difference based on a distance between the radar and the object. By detecting the frequency difference can realize measurement of physical quantities between the object and the radar, such as relative distance information, relative speed information, relative angle information, and the like. An electrical signal corresponding to the electromagnetic waves with continuously changing frequencies is called FMCW signal (or transmitted signal; chirp, chirp signal). Correspondingly, the electrical signal corresponding to the echoes is called an echo signal. After an intermediate frequency signal obtained after mixing the transmitted signal and the echo signal is discretely sampled, the range-dimension Fourier transform is performed within a chirp (during a duration of a single chirp signal), and the slow-time-dimension Fourier transform (for example, Doppler-Fast Fourier transform (referred to as "Doppler-FFT" for short)) is performed between chirps (a time interval between multiple chirp signals), which can obtain a range-Doppler two-dimensional spectrum, and then detect distance information and speed information between the target and the radar.

In order to increase the range of the millimeter-wave radar, the radar can adopt the Doppler division MIMO (referred to as "DDM") debugging mode. In this debugging mode, the transmitting channels of the radar are concurrently opened/enabled, and different transmitting channels modulate different phase steps.

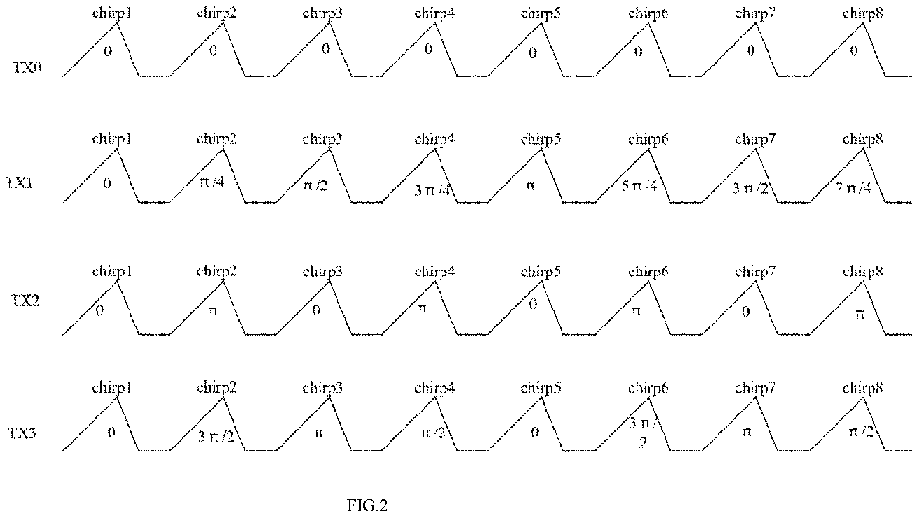

FIG. 2 illustrates a typical phase of a radar (referred to as "4T4R radar" for short) with four transmitting channels and four receiving channels. A first transmitting channel TX0 transmits pulses with a phase step of 0°, a second transmitting channel TX1 transmits pulses with a phase step of 45°, a third transmitting channel TX2 transmits pulses with a phase step of 180°, and a fourth transmitting channel TX3 transmits pulses with a phase step of 270°. An echo signal received by each receiving antenna includes signals corresponding to the four transmitting antennas. Since the phase step of each of the transmitting antennas is determined, a relative position of a signal corresponding to each of the transmitting antennas in the echo signal is determined.

The 4T4R radar transmits transmitting pulses through four transmitting channels respectively, receives echo signals through four receiving channels respectively, and performs range-dimension Fourier transform and Doppler-FFT on the echo signals to obtain a range-Doppler two-dimensional spectrum.

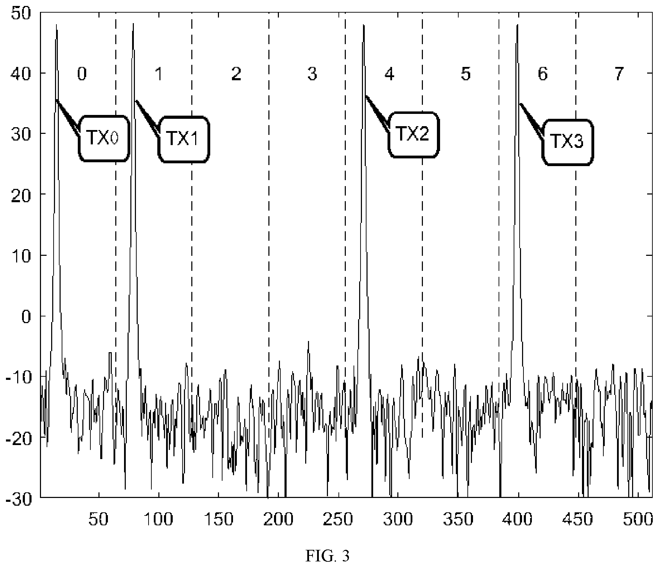

FIG. 3 is a schematic diagram of a Doppler spectrum of a single target, where the abscissa represents two-dimensional-fast Fourier transform (2D-FFT) Doppler bins, with the unit being "unit/piece", and the ordinate represents two-dimensional-fast Fourier transform power (2D-FFT power), with the unit being decibel (dB).

If the entire Doppler spectrum is divided into 8 regions (or "sub-bands"), as shown in FIG. 3, transmitted signals of transmitting channels TX0, TX1, TX2, and TX3 may correspond respectively to sub-bands [0, 1, 4, 6], and Doppler bins are respectively: $\{i, i+\Delta D, i+4\Delta D, i+6\Delta D\}$, where $i$ represents a Doppler bin where a spectral line of the transmitting channel TX0 is located, and $\Delta D$ represents a Doppler interval between sub-bands. Since there are four spectral lines in the Doppler spectrum of the single target, a transmitting channel order corresponding to the four spectral lines can be determined according to a design arrangement model of the four spectral lines (for example, the intervals between spectral lines are respectively $[\Delta D, 3\Delta D, 2\Delta D]$).

For example, if the entire Doppler spectrum is divided into 8 sub-bands, since the Doppler spectrum includes 512 Doppler bins, after dividing the Doppler spectrum into 8 sub-bands at equal intervals, each sub-band includes 64 Doppler bins, and the number of Doppler bins between any two adjacent signals is the same. For example, if the transmitted signal of the transmitting channel TX0 may be in a Doppler bin with a value of 1, the transmitted signal of the transmitting channel TX1 may be in a Doppler bin with a value of 1+64, the transmitted signal of the transmitting channel TX2 may be in a Doppler bin with a value of $1+64\times4$, and the transmitted signal of the transmitting channel TX3 may be in a Doppler bin with a value of $1+64\times6$.

However, when at least two targets are present, the phenomenon of Doppler spectrum aliasing is easy to occur. The following describes dual-target Doppler spectrum aliasing for illustration.

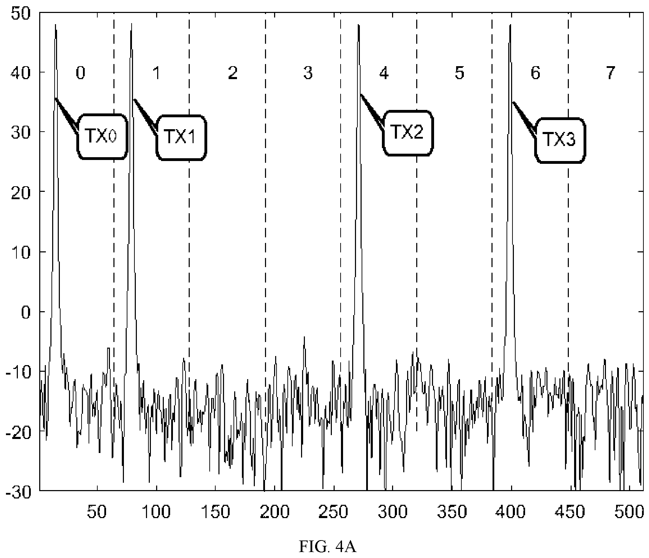

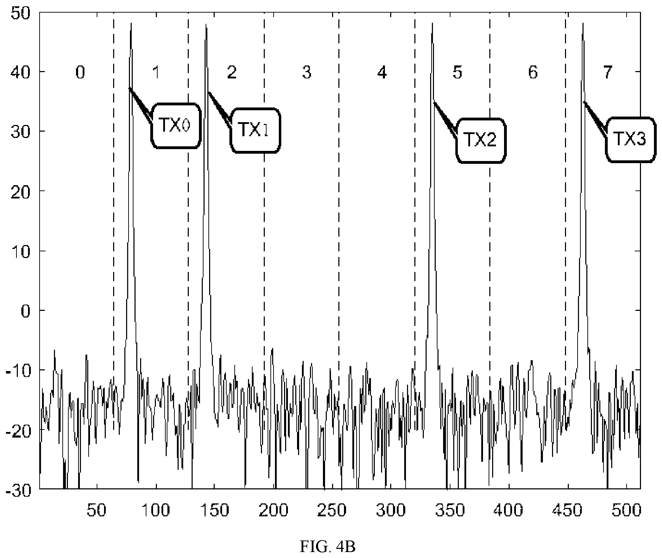

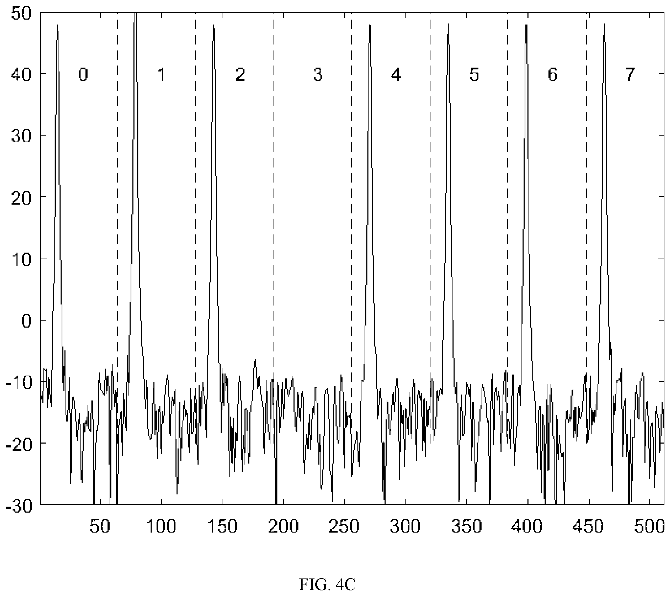

FIG. 4A is a schematic diagram of a Doppler spectrum of target 1. As shown in FIG. 4A, transmitting channels TX of target 1 correspond respectively to four sub-bands [0, 1, 4, 6], and the Doppler bins are respectively: $\{i, i+\Delta D, i+4\Delta D, i+6\Delta D\}$. FIG. 4B is a schematic diagram of a Doppler spectrum of target 2. As shown in FIG. 4B, transmitting channels TX of target 2 correspond respectively to four sub-bands [1, 2, 5, 7], and Doppler bins are: $\{i+\Delta D, i+2\Delta D, i+5\Delta D, i+7\Delta D\}$. FIG. 4C is a schematic diagram of an aliased Doppler spectrum of target 1 and target 2. As shown in FIG. 4C, target 1 and target 2 are aliased in sub-band 1, so there are spectral lines in sub-bands [0, 1, 2, 4, 5, 6, 7]. Due to the occurrence of aliasing, the spectral lines no longer meet the design arrangement model (that is, the intervals between spectral lines are no longer $[\Delta D, 3\Delta D, 2\Delta D]$), so the transmitting channels TX corresponding to each of the two targets could not be determined. That is, the speed of each of the targets could not be calculated and subsequent angle estimation of each of the targets is also hard to implement. In FIGS. 4A to 4C, the abscissa represents two-dimensional-fast Fourier transform (2D-FFT) Doppler bins, with the unit being "unit/piece". The ordinate represents two-dimensional-fast Fourier transform power (2D-FFT power), with the unit being decibel (dB).

In some cases, the phenomenon of Doppler aliasing of the targets can be avoided by non-uniform phase modulation design (that is, phase modulation steps of transmitting channels are coprime). However, this technology requires a relatively high phase modulation accuracy, and the radio frequency system of the radar is often difficult to implement, and the engineering implementation is too difficult.

Embodiments of the present disclosure provide a signal processing method. Probabilities under different aliasing combinations are estimated by an algorithm based on maximum likelihood estimation, spectral lines of a plurality of targets are separated according to a combination corresponding to a maximum probability among the probabilities, and signals before aliasing of targets are recovered. This method does not require high hardware of the radio frequency system of the radar. The experiment proves that the accuracy of the solution is high, the amount of calculation is small, and this method has high engineering realization value.

Embodiments of the present disclosure provide a signal processing method, which is applied to a processing module in a radar, and a module, a device, or an electronic device having processing and computing capabilities, such as a host computer communicatively connected to the radar. The radar may be a millimeter wave radar or the like.

According to the signal processing method provided in the embodiments of the disclosure, the DDM debugging method is adopted, a non-zero minimum phase step value of the radar is defined as Dph, the entire Doppler spectrum is divided into 360/Dph regions (or referred to as "sub-bands"), and the number of the sub-bands is larger than the number of transmitting antennas. For example, the minimum phase step value is 45°, the entire Doppler spectrum is divided into 8 sub-bands, and the number of antennas is 4. However, the present disclosure is not limited to the example herein, and the minimum phase step value may also be 15°, 30°, 60°, or the like.

According to the signal processing method provided in the embodiments of the disclosure, there is no restriction on the number of transmitting antennas and the number of receiving antennas, and the signal processing method is applicable to a MIMO scheme of the DDM mode in which there may be any number of transmitting antennas and any number of receiving antennas. That is, the radar is not limited to the 4T4R radar mentioned above. For example, the radar may also be a 3T4R radar, a 6T8R radar, or an 8T8R radar, or the like.

The minimum phase step value can be determined through the comprehensive consideration of the number of antennas, the number of transmitting channels, and the number of receiving channels of the radar, to meet the requirements of system performance of the radar.

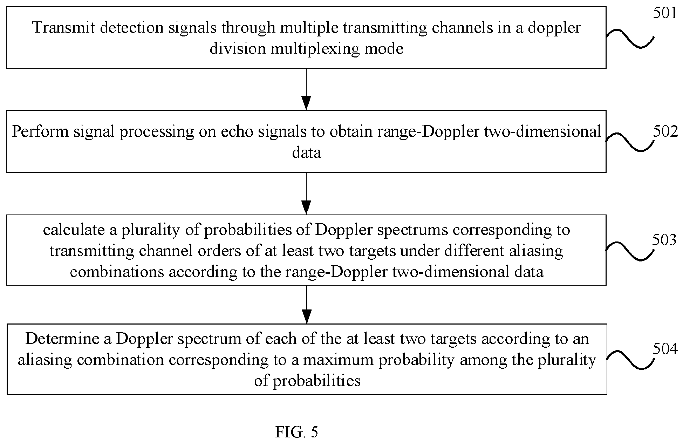

FIG. 5 is a flow chart of a signal processing method according to an embodiment of the disclosure.

At block 501, detection signals are transmitted through multiple transmitting channels in a Doppler division multiplexing (DDM) mode.

In this embodiment, there is no restriction on the type of each of the detection signals transmitted, and each of the detection signals may be a continuous wave (CW), a frequency modulated continuous wave (FWCW), or the like, which will not be described in detail herein.

At block 502, signal processing is performed on echo signals to obtain range-Doppler two-dimensional data.

The signal processing of the echo signals includes analog signal processing and digital signal processing. The analog signal processing includes mixing and converting the echo signals to obtain an analog input signal. The digital signal processing includes converting the analog input signal into a digital signal and performing a plurality of data processing processes: Fourier transform, signal processing, angle detection, and point cloud imaging. The Fourier transform may include a one-dimensional FFT (1D-FFT) and a two-dimensional FFT (2D-FFT). The 1D-FFT includes, for example, a range-dimension Fourier transform and a velocity-dimension Fourier transform, which can obtain range-dimension data and velocity-dimension data, respectively. The 2D-FFT includes, for example, a range-dimension Fourier transform and a Doppler-dimension Fourier transform performed successively to obtain range-Doppler two-dimensional data.

At block 503, a plurality of probabilities of Doppler spectrums corresponding to transmitting channel orders of at least two targets under different aliasing combinations are calculated according to the range-Doppler two-dimensional data.

At block 504, Doppler spectral lines (a Doppler spectrum) of each of the at least two targets is determined according to an aliasing combination, where a probability corresponding to the aliasing combination is a maximum probability among the plurality of probabilities.

There is no restriction on the type of each of the at least two targets in the present disclosure. The target can be a static target, such as a display screen fixed on the wall in a conference room, and trees, street lamps, and railings on the side of the road. The target can also be a dynamic target, such as a people who is walking, a car that is moving, which are not described in details herein.

In some cases, it is generally uncertain how many targets will appear within the detection range of the radar. For example, the radar is used in intelligent traffic lights, intelligent signs, traffic cameras, and other devices. In these cases, the plurality of probabilities of Doppler spectrums corresponding to transmitting channel orders of at least two targets under different aliasing combinations are calculated as follows. All possible combinations of the transmitting channel orders of the at least two targets are traversed, and a probability corresponding to each of all the possible combinations is calculated. For example, all possible combinations of transmitting channel orders of each of 2, 3, ..., and (the number of the sub-bands-1) targets are traversed successively and a probability corresponding to each of all the possible combinations may be calculated.

In some cases, there are generally two or three targets appearing within the detection range of the radar. For example, the radar is applied in advanced driver assistance system (ADAS). In these cases, possible combinations of transmitting channel orders of two targets, or possible combinations of transmitting channel orders of three targets, or possible combinations of transmitting channel orders of each of two and three targets are traversed, and then the probability corresponding to each of the possible combinations may be calculated.

It is worth noting that after obtaining the range-Doppler two-dimensional data, further processing can be performed to obtain the Doppler spectrums. The further processing described herein includes, but is not limited to: determining a target by constant false alarm rate (CFAR) detection, and further obtaining sub-bands of the Doppler spectrum of the target. The existing methods of processing range-Doppler two-dimensional data to obtain Doppler spectrums are all applicable to the disclosure, which will not be repeated herein.

When the number of peaks in the Doppler spectrum including the sub-bands is equal to the number of transmitting channels, the Doppler spectrum can be directly determined as a spectrum of a single target. For example, in the example of FIG. 3, there are four peaks in the Doppler spectrum, which is equal to the number of transmitting channels, such that the spectrum shown in FIG. 3 may be determined to be the spectrum of the single target.

When the number of the peaks in the Doppler spectrum including the sub-bands is greater than the number of the transmitting channels, it may be determined that there are at least two targets. That is, the Doppler spectrum is determined to be an aliased Doppler spectrum of the at least two targets. For example, in the example of FIG. 4C, in the Doppler spectrum, there are peaks in the sub-bands [0, 1, 2, 4, 5, 6, 7], i.e., the number of peaks equals 7, which is greater than the number, 4, of transmitting channels, and thus, it is determined that there may be the at least two targets.

In order to facilitate those skilled in the art to better understand the signal processing method provided in the above-described embodiment, the Doppler spectrum shown in FIGS. 4A to 4C will be described below as an example.

In the case of the phase modulation configuration of the transmitting channels shown in FIG. 2, possible transmitting channel order ("TX order" for short, that is, the possibility of transmitting channels occupying sub-bands) of a single target may include following situations:

$$H_0: \{S_0, S_1, S_4, S_6\}$$

$$H_1: \{S_1, S_2, S_5, S_7\}$$

$$H_2: \{S_2, S_3, S_6, S_0\}$$

$$H_3: \{S_3, S_4, S_7, S_1\}$$

$$H_4: \{S_4, S_5, S_0, S_2\}$$

$$H_5: \{S_5, S_6, S_1, S_3\}$$

$$H_6: \{S_6, S_7, S_2, S_4\}$$

$$H_7: \{S_7, S_0, S_3, S_5\} \qquad \text{Formula (1)}$$

During radar operation, speed information of the detected target may be included in any Doppler bin. That is, transmitting channel TX0 may correspond to any sub-band. In the above example, the entire Doppler spectrum is divided into 8 sub-bands. For example, there are 8 kinds of situations for the position (that is, the position corresponding to the signal of the transmitting channel TX0 in the Doppler spectrum) of transmitting channel TX0. Since the relative position of the signal corresponding to each of the transmitting antennas in the echo signal is determined, in the case where the position of transmitting channel TX0 is determined, a position of transmitting channel TX1, a position of transmitting channel TX2, and a position of transmitting channel TX3 position are also determined. As shown in FIG. 3, when the signal corresponding to transmitting channel TX0 is in the first (sub-band 0) of the sub-bands in the Doppler spectrum, the signal corresponding to transmitting channel TX1 is in the second (sub-band 1) of the sub-bands in the Doppler spectrum, the signal corresponding to transmitting channel TX2 is in the fifth (sub-band 4) of the sub-bands in the Doppler spectrum, and the signal corresponding to transmitting channel TX3 is in the seventh (sub-band 6) of the sub-bands in the Doppler spectrum.

Therefore, in the case where it is uncertain in which sub-band the signal corresponding to transmitting channel TX0 is, the signals corresponding to transmitting channels TX among the extracted eight signals may have possible position sequences shown in Formula (1). In Formula (1), an order corresponding to transmitting channels TX (the transmitting channel order) indicates the sub-bands to which the signals corresponding to the four transmitting antennas respectively belong. For example, in transmitting channel order 1 ($H_0$), the signal corresponding to transmitting channel TX0 is in the first sub-band (sub-band 0), the signal corresponding to transmitting channel TX1 is in the second sub-band (sub-band 1), the signal corresponding to transmitting channel TX3 is in the fifth sub-band (sub-band 4), and the signal corresponding to transmitting channel TX3 is in the seventh sub-band (sub-band 6).

At step 1), the probabilities under different possible aliasing combinations are calculated. In the following, $H_1$ is described as an example of the transmitting channel order of target 1 and $H_2$ is described as an example of the transmitting channel order of target 2.

Energy of each of the sub-bands received by the radar is shown in FIG. 4C, and the energy P received by the radar is represented by:

$$P = [p_0, p_1, p_2, p_3, p_4, p_5, p_6, p_7]^T \qquad \text{Formula (2)}$$

In Formula (2), P is a one-dimensional vector, $p_i$ indicates energy of an i-th sub-band of the sub-bands in FIG. 4C, i = 0, 1, 2, 3... 7, and T denotes transpose.

At step 2), energy of aliasing signals is ignored/removed. It is assumed that the transmitting channel order of target 1 is $H_1$ and the transmitting channel order of target 2 is $H_2$, the energy $p_2$ of the aliasing signals is ignored, unaliased energy P' of the radar is obtained as:

$$P' = [p_0, p_1, p_3, p_4, p_5, p_6, p_7]^T \qquad \text{Formula (3)}$$

It is to be noted that the energy of aliasing signals has a phase, and when energies in the sub-band are aliased, azimuth ambiguity may be caused. Therefore, it is necessary to remove the energy of the aliasing signals.

At step 3), it is assumed that the energy of target 1 is A1 and the energy of target 2 is A2, and P' can be expressed as:

$$M[A_1 \ A_2] + N = P' \qquad \text{Formula (4)}$$

M represents a superposition matrix under the condition that the transmitting channel order of target 1 is $H_1$ and the transmitting channel order of target 2 is $H_2$:

$$M = [m_1 \ m_2] = \begin{bmatrix} 1 & 0 \\ 0 & 1 \\ 0 & 0 \\ 1 & 0 \\ 0 & 1 \\ 1 & 0 \\ 0 & 1 \end{bmatrix} \qquad \text{Formula (5)}$$

In the formula (5), $m_1$ represents a superposition factor when the transmitting channel order of target 1 is $H_1$. Since the transmitting channel order of target 1 is $H_1$: $\{S_1, S_2, S_5, S_7\}$ and $S_2$ is removed, element values corresponding to sub-bands $S_1$, $S_5$, and $S_7$ in $m_1$ are set to be 1, and the element values corresponding to other sub-bands in $m_1$ are set to be 0. $m_2$ represents a superposition factor when the transmitting channel order of target 2 is H2. Similarly, since the transmitting channel order of target 2 is $H_2$: $\{S_2, S_3, S_6, S_0\}$, $S_2$ is removed, the element values corresponding to sub-bands $S_3$, $S_6$, and $S_0$ in $m_2$ are set to be 1, and element values corresponding to other sub-bands in $m_2$ are set to be 0.

N represents a noise matrix, which represents a noise power received by each sub-band of the sub-bands.

$$N = [n0, n1, n3, n4, n5, n6, n7]^T \qquad \text{Formula (6)}$$

Thereafter, least-square estimations of A1 and A2 are:

$$[\widehat{A_1} \ \widehat{A_2}] = (M^T M)^{-1} M^T P' \qquad \text{Formula (7)}$$

In Formula (7), $\widehat{A_1}$ represents the least-square estimation of $A_1$ and $\widehat{A_2}$ represents the least-square estimation of $A_2$, and ()$^{-1}$ represents an inversion operation.

A probability I in the case where the transmitting channel order of target 1 is $H_1$ and the transmitting channel order of target 2 is $H_2$ is defined as:

$$I = -\frac{1}{L} \left\| P' - m_1 \widehat{A_1} - m_2 \widehat{A_2} \right\| \qquad \text{Formula (8)}$$

L represents a length of an unaliased spectral line. For example, in FIG. 4C, the length of the unaliased spectral line is 7. It can be seen that the length of the unaliased spectral line is the same as the number of elements of P'. $\|\cdots\|$ represents a modulus operation.

At step 4), repeat step 3), all possible combinations of transmitting channel orders of the two targets are traversed, a combination corresponding to a largest probability I among the plurality of probabilities I is determined, and unaliased spectral lines of each of the two targets corresponding to the combination are determined (e.g., FIG. 4A and FIG. 4B) for subsequent angle estimation.

According to the above example, the probability corresponding to each of all the possible combinations is calculated by including following operations: (1) for each of all the possible combinations, calculating a least-square estimation of an energy matrix of each of the at least two targets corresponding to the combination according to the energy matrix and a superposition matrix corresponding to the combination, and (2) calculating the probability corresponding to the combination according to the energy matrix, the superposition matrix, and the least-square estimation of the energy matrix of each of the at least two targets. Specifically, one combination for which the probability has not been calculated may be selected from all possible aliasing combinations, and operations (1) and (2) may be performed for the selected combination until the probability is calculated for each of all the possible aliasing combinations. The energy matrix is a matrix obtained according to energy of the echo signals in each of the sub-bands of a corresponding Doppler spectrum corresponding to the combination. Each column of the superposition matrix corresponds to a superposition factor of a target, and element values in the superposition factor corresponding to a transmitting channel order of the target are set to be 1, and other element values in the superposition factor are set to be 0.

The sub-bands of the Doppler spectrum are obtained by dividing according to the minimum phase step value of the plurality of transmitting channels relative to a reference transmitting channel, and the number of the sub-bands is larger than the number of transmitting antennas.

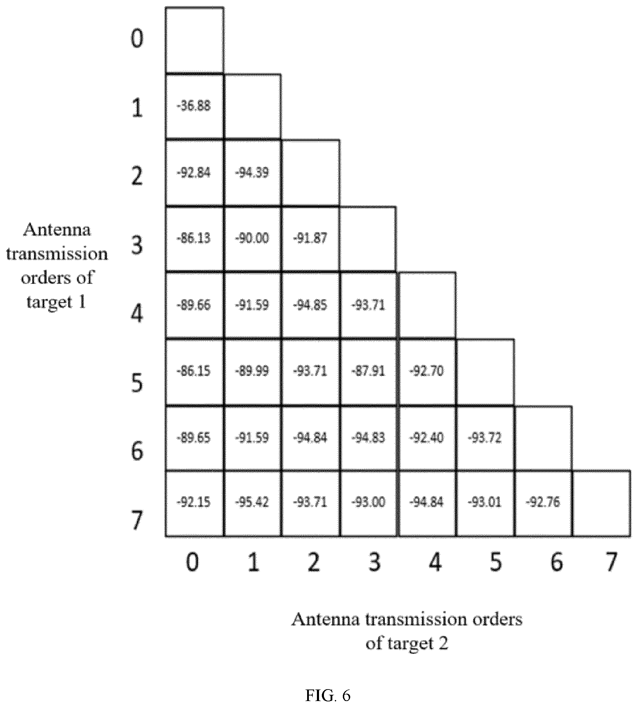

FIG. 6 is a schematic diagram of probabilities estimated corresponding to each of different combinations of transmitting channel orders in the case where the transmitting channel order of target 1 is $H_1$ and the transmitting channel order of target 2 is $H_2$. It can be seen that the signal processing method provided in the embodiments of the present disclosure can correctly estimate the aliasing combination of the transmitting channel orders in the case of dual-target aliasing.

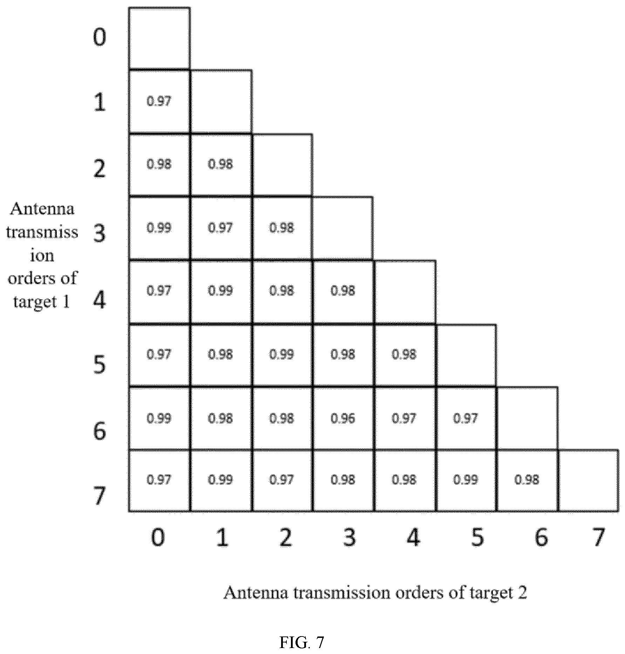

FIG. 7 is a statistical schematic diagram of a calculation accuracy rate corresponding to different aliased combinations of transmitting channel orders between the targets when the energy difference between target 1 and target 2 is within 10 dB. It can be seen that the calculation accuracy rate of the signal processing method provided in the embodiments of the present disclosure is higher than 96%.

It shall be understood by those skilled in the art that the signal processing method provided in the embodiments of the present disclosure is not limited to the case of the above-described dual-target aliasing. When the number of targets is greater than or equal to 2 or less than the number of sub-bands, the signal processing method provided in the embodiments of the present disclosure can be used to estimate the aliasing combination of transmitting channel orders.

When the number of targets is Q, the unaliased energy P' is an L*1 matrix, the superposition matrix M is an L*Q matrix, and least-square estimations of $A_1$, $A_2$... $A_Q$ are calculated according to a formula:

$$\left[\widehat{A_1}\ \widehat{A_2}\ ...\ \widehat{A_Q}\right] = (M^T M)^{-1} M^T \mathrm{P}'$$

The probability I is calculated according to a formula:

$$\mathrm{I} = -\frac{1}{L}\left\|\mathrm{P}' - m_1\widehat{A_1} - m_2\widehat{A_2}\cdots - m_Q\widehat{A_Q}\right\|$$

In operations at block 503, when calculating the plurality of probabilities of Doppler spectrums corresponding to transmitting channel orders of at least two targets under different aliasing combinations, it is possible to calculate the probability corresponding to each of various possible aliasing combinations corresponding to two targets assuming that the number of targets is 2, then to calculate the probability corresponding to each of various possible aliasing combinations corresponding to three targets assuming that the number of targets is 3, and so on, until the probability corresponding to each of various possible aliasing combinations corresponding to (sub-bands -1) targets assuming that the number of targets is (the number of sub-bands minus 1). In operations at block 504, an aliasing combination corresponding to a maximum value of all calculated probabilities is determined. However, there is no restriction on the calculating manners of the probabilities corresponding to all the possible aliasing combinations in the present disclosure, and the probabilities corresponding to all the possible aliasing combinations can be calculated in any order.

For example, when the number of targets is 3, it is assumed that a transmitting channel order of target 1 is $H_1$: {$S_1$, $S_2$, $S_5$, $S_7$}, a transmitting channel order of target 2 is $H_2$: {$S_2$, $S_3$, $S_6$, $S_0$}, and a transmitting channel order of target 3 is $H_3$: {$S_3$, $S_4$, $S_7$, $S_1$}, and aliasing energies $p_1$, $p_2$, $p_7$ are removed, and unaliased energy P' is represented by: P' = [$p_0$,$p_4$,$p_5$, $p_6$]$^T$. The superposition matrix M is represented by:

$$M = [m_1 \ m_2 \ m_3] = \begin{bmatrix} 1 & 0 & 0 \\ 0 & 1 & 0 \\ 0 & 1 & 0 \\ 0 & 0 & 1 \end{bmatrix}$$

The step division of the above various methods is only for clarity of description. When implemented, it can be combined into one step or some steps can be split and decomposed into multiple steps. As long as they include the same logical relationship, they are all within the scope of protection of this patent. Adding insignificant modifications or introducing insignificant designs to algorithms or processes, but not changing the core designs of algorithms and processes, is within the scope of protection of this patent.

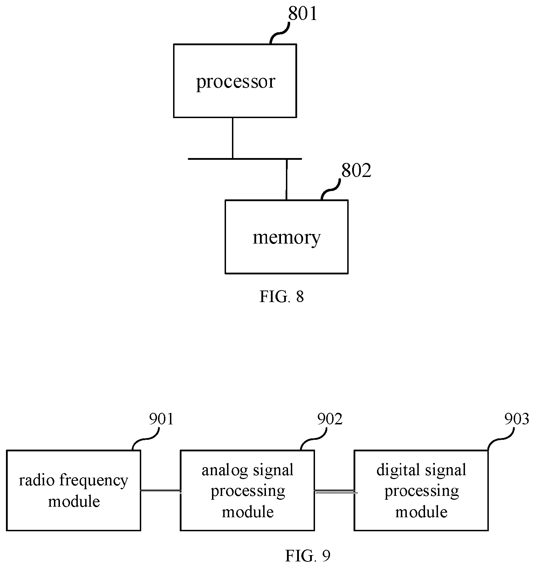

According to another aspect, embodiments of the present disclosure further provide a radar chip, as shown in FIG. 8, including: at least one processor 801, and a memory 802 communicatively connected to the at least one processor 801. The memory 802 is configured to store instructions executable by the at least one processor 801, and the instructions are executable by the at least one processor 801 to enable the at least one processor 801 to perform the signal processing method described in any of the above method embodiments.

The memory 802 and the processor 801 are connected by a bus. The bus may include any number of interconnected buses and bridges, and the bus connects various circuits of one or more processors 801 and the memory 802 together. The bus may also connect together various other circuits such as peripherals, voltage regulators, and power management circuits, which are well known in the art and, therefore, will not be further described herein. The bus interface provides an interface between the bus and a transceiver. The transceiver may be one element or multiple elements, such as multiple receivers and transmitters, providing means for communicating with various other devices over a transmission medium. The data processed by the processor 801 is transmitted over a wireless medium through an antenna, and the antenna further receives the data and transmits the data to the processor 801.

The processor 801 is responsible for managing the bus and general processing, and may also provide various functions, including timing, peripheral interfaces, voltage regulation, power management, and other control functions. The memory 802 may be configured to store data used by the processor 801 in performing operations.

According to another aspect, embodiments of the present disclosure further provide a computer-readable storage medium storing a computer program. The computer program, when executed by the processor, implements the signal processing method provided in any of the above method embodiments.

Those skilled in the art can understand that all or part of the steps in the method of the above embodiments can be completed by instructing related hardware through a program stored in a storage medium and including several instructions for causing a device (which may be a single chip microcomputer, a chip, etc.) or a processor to execute all or part of the steps in the method of each embodiment of the present disclosure. The storage medium includes various media capable of storing program codes, such as a USB disk, a removable hard disk, a read-only memory (ROM), a random-access memory (RAM), a magnetic disk, or an optical disk.

The technical solutions according to the embodiments of the present disclosure can be embodied in the form of a software product, and the software product can be stored in a non-transitory storage medium (which can be a CD-ROM, a U disk, a mobile hard disk, etc.) or on a network, which include several instructions to cause a computing device (which may be a personal computer, a server, or a network device, etc.) to perform the above-described method according to embodiments of the present disclosure.

The software product may employ any combination of one or more readable media. The readable medium may be a readable signal medium or a readable storage medium. The readable storage medium may be, for example, but is not limited to, an electrical, magnetic, optical, electromagnetic, infrared, or semiconductor system, device, or means, or a combination of any of the above. More specific examples (a non-exhaustive list) of the readable storage medium include a portable disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof that have an electrical connection having one or more wires.

The computer-readable storage medium may include a data signal propagated in a baseband or as part of a carrier wave, and the computer-readable storage medium has readable program code carried therein. Such propagated data signals may take a variety of forms, including, but not limited to, electromagnetic signals, optical signals, or any suitable combination of the foregoing. The readable storage medium may also be any readable medium other than a readable storage medium that may transmit, propagate, or transmit a program for use by or in connection with an instruction execution system, apparatus, or device. The program code contained on the readable storage medium may be transmitted using any suitable medium, including, but not limited to, wireless, wired, optical cable, RF, etc., or any suitable combination of the foregoing.

Program codes for performing the operations of the present disclosure may be written in any combination of one or more programming languages, including object-oriented programming languages, such as Java, C + +, and the like, as well as conventional procedural programming languages, such as the "C" language or similar programming languages. The program codes may execute entirely on the user computing device, partially on the user device, as a stand-alone software package, partially on the user computing device and partially on a remote computing device, or entirely on a remote computing device or server. Where a remote computing device is involved, the remote computing device may be connected to the user computing device over any kind of network, including a local area network (LAN) or a wide area network (WAN), or may be connected to an external computing device (e.g., using to connect over the Internet an Internet service provider).

The computer-readable medium carries one or more programs that, when executed by a device, cause the computer-readable medium to implement the aforementioned functions.

Embodiments of the present disclosure relate to an integrated circuit, as shown in FIG. 9, including a radio frequency module 901, an analog signal processing module 902, and a digital signal processing module 903 connected in sequence. The radio frequency module 901 is configured to transmit detection signals in a doppler division multiplexing (DDM) mode through a plurality of transmitting antennas, and to receive echo signals through a plurality of receiving antennas. The analog signal processing module 902 is configured to perform down-frequency processing on the echo signal to obtain an intermediate frequency signal. The digital signal processing module 903 is configured to perform analog-to-digital conversion on the intermediate frequency signal to obtain a digital signal, and perform the following processing on the digital signal: performing signal processing on the echo signals to obtain range-Doppler two-dimensional data; calculating, according to the range-Doppler two-dimensional data, a plurality of probabilities of Doppler spectrums corresponding to transmitting channel orders of at least two targets under different aliasing combinations; and determining a Doppler spectrum of each of the at least two targets according to an aliasing combination corresponding to a maximum probability among the plurality of probabilities.

Embodiments of the present disclosure relate to a radio device, including a carrier, the integrated circuit provided on the carrier, and at least one antenna provided on the carrier, or the antenna and the integrated circuit are integrated into an integrated device provided on the carrier. The integrated circuit is connected with the antenna and is used for transmitting target detection signals and/or receiving echo signals.

When the antenna and the integrated circuit are not integrated into an integrated device, the integrated circuit is connected to the antenna through a first transmission line, and the first transmission line may be a PCB trace. The carrier may be a printed circuit board (PCB), such as a development board, a data acquisition board, or a motherboard of a device, which will not be described in detail here.

Since the structure and operation principle of the integrated circuit included in the radio device have been described in detail in the above-described embodiments, which will not be described here.

Embodiments of the present disclosure relate to a terminal device, including: a device body, and a radio device as described above disposed on the device body. The radio device is used for object detection to provide reference information for operation of the device body.

In one embodiment of the present disclosure, the radio device may be disposed outside the device body. In another embodiment of the present disclosure, the radio device may be disposed inside the device body. In another embodiment of the present disclosure, the radio device may be partially disposed inside the device body and partially disposed outside the device body, which is not limited in embodiments of the present disclosure, and depend on the situation.

It is to be noted that the radio device can realize functions such as target detection by transmitting and receiving radio signals to provide measurement information of the detected target to the device body, and thus assist or even control the operation of the device body. The measurement information includes, for example, at least one of a relative distance, a relative speed, and a relative angle.

In an alternative embodiment, the device body may be a component and product for applications in fields such as transportation, consumer electronics, monitoring, in-cabin detection, and health care. For example, the device body can be intelligent transportation equipment (such as cars, motorcycles, ships, subways, trains, etc.), security equipment (such as cameras), liquid level/flow rate detection equipment, smart wearable devices (such as bracelets, glasses, etc.), smart home equipment (such as sweeping robots, door locks, TVs, air conditioners, smart lights, etc.), various communication equipment (such as mobile phones, tablets, etc.), as well as barriers, intelligent traffic lights, intelligent signs, traffic cameras, and various industrialized robotic arms (or robots), etc. The device body can also be various instruments used to detect vital characteristic parameters and various equipment equipped with the instruments, such as car cabin detection, indoor personnel monitoring, intelligent medical equipment, consumer electronics equipment, or the like.

In another optional embodiment, when the above-described device body is applied to an advanced driving assistance system (i.e., ADAS), the radio device as an on-board sensor can provide various functional safety guarantees such as automatic emergency braking (i.e., AEB), blind spot detection warning (i.e., BSD), auxiliary lane change warning (i.e., LCA), and rear cross-traffic alert (i.e., RCTA) for the ADAS system.

In addition, the examples mentioned in the above embodiments can be freely combined, and any combination mode can be understood as one embodiment. The appearances of "embodiments" or "examples" in various locations in the description do not necessarily refer to the same embodiment, nor are they independent or alternative embodiments mutually exclusive from other embodiments. It will be understood by those skilled in the art that the embodiments described herein may be combined with other embodiments.

It will be understood by those skilled in the art that the above-described embodiments are specific embodiments for carrying out the present disclosure, and that various changes in form and detail may be made thereto in practical application without departing from the spirit and scope of the present disclosure.

**Claims**

1. A signal processing method, comprising:

    transmitting detection signals in a Doppler division multiplexing (DDM) mode through a plurality of transmitting channels;
    processing echo signals to obtain range-Doppler two-dimensional data;
    calculating a plurality of probabilities of Doppler spectrums corresponding to transmitting channel orders of at least two targets under different aliasing combinations according to the range-Doppler two-dimensional data; and
    determining a Doppler spectrum of each of the at least two targets according to an aliasing combination corresponding to a maximum probability among the plurality of probabilities.

2. The signal processing method of claim 1, wherein calculating the plurality of probabilities of the Doppler spectrums corresponding to the transmitting channel orders of the at least two targets under the different aliasing combinations according to the range-Doppler two-dimensional data comprises:

    traversing all possible combinations of the transmitting channel orders of the at least two targets; and
    calculating a probability corresponding to each of all the possible combinations to obtain the plurality of probabilities.

3. The signal processing method of claim 2, wherein traversing all the possible combinations of the transmitting channel orders of the at least two targets comprises at least one of:

    traversing possible combinations of transmitting channel orders of two targets; and
    traversing possible combinations of transmitting channel orders of three targets.

4. The signal processing method of claim 2 or 3, wherein calculating the probability corresponding to each of all the possible combinations comprises:

    for each respective possible combination of all the possible combinations,
    calculating, according to an energy matrix of each of the at least two targets and a superposition matrix corresponding to the respective possible combination, a least-square estimation of the energy matrix of each of the at least two targets corresponding to the respective possible combination; and
    calculating the probability corresponding to the respective possible combination according to the energy matrix, the superposition matrix, and the least-square estimation of the energy matrix of each of the at least two targets;
    wherein the energy matrix is a matrix obtained according to energy of the echo signals in each of sub-bands of a corresponding Doppler spectrum corresponding to the respective possible combination; and
    wherein each column of the superposition matrix corresponds to a superposition factor of a target of the at least two targets, wherein in the superposition factor, element values corresponding to a transmitting channel order of the target are set to be 1, and other element values are set to be 0.

5. The signal processing method of claim 4, wherein the least-square estimation of the energy matrix of each of the at least two targets corresponding to the respective possible combination is calculated according to a formula:

$$\left[\widehat{A_1} \ \widehat{A_2} \ ... \ \widehat{A_Q}\right] = (M^T M)^{-1} M^T \mathrm{P}'$$

wherein the probability corresponding to the respective possible combination is calculated according to a formula:

$$I = -\frac{1}{L}\left\|P' - m_1\,\widehat{A_1} - m_2\widehat{A_2}\cdots - m_Q\widehat{A_Q}\right\|$$

wherein Q represents a number of targets, L represents a length of an unaliased spectral line in the corresponding Doppler spectrum, P' represents an unaliased energy matrix, and is an L*1 matrix, $\widehat{A_1}, \widehat{A_2}, \ldots\ldots, \widehat{A_Q}$ represents least-square estimation of the energy matrix of each of the targets, respectively, T denotes transpose, ()$^{-1}$ represents an inversion operation, M represents the superposition matrix and is an L*Q matrix, $m_1, m_2 \ldots\ldots m_Q$ represents the superposition factor of each of the targets, and $\|\cdots\|$ represents a modulus operation; and wherein the unaliased energy matrix is obtained by removing energy of an aliased signal from the energy matrix.

6. The signal processing method of claim 4 or 5, wherein the sub-bands of the corresponding Doppler spectrum are obtained by dividing according to a non-zero minimum phase step value of the plurality of transmitting channels relative to a reference transmitting channel, and the number of the sub-bands is larger than the number of transmitting antennas.

7. The signal processing method of claim 6, wherein the minimum phase step value is any one of 15°, 30°, 45°, and 60°.

8. The signal processing method of any of claims 2 to 7, wherein traversing all the possible combinations of the transmitting channel orders of the at least two targets comprises:
traversing all possible combinations of transmitting channel orders of each of 2, 3, ..., and the number of the sub-bands-1 targets.

9. The signal processing method of any of claims 1 to 8, further comprising:

before calculating the plurality of probabilities of the Doppler spectrums corresponding to the transmitting channel orders of the at least two targets under the different aliasing combinations according to the range-Doppler two-dimensional data,
determining that the number of peaks of each of the Doppler spectrums is greater than the number of the plurality of transmitting channels.

10. A computer-readable storage medium, storing a computer program which, when executed by a processor, implements the signal processing method of any of claims 1 to 9.

11. A radar chip, comprising:

at least one processor; and
a memory communicatively connected to the at least one processor; wherein
the memory stores instructions executable by the at least one processor, wherein the at least one processor when executing the instructions causes the radar chip to perform the signal processing method of any of claims 1 to 9.

12. An integrated circuit, comprising a radio frequency module, an analog signal processing module, and a digital signal processing module connected in sequence, wherein

the radio frequency module is configured to transmit detection signals in a doppler division multiplexing (DDM) mode through a plurality of transmitting antennas, and to receive echo signals through a plurality of receiving antennas;
the analog signal processing module is configured to perform down-frequency processing on the echo signals to obtain an intermediate frequency signal; and
the digital signal processing module is configured to perform analog-to-digital conversion on the intermediate frequency signal to obtain a digital signal, and to perform following processing on the digital signal:

processing the echo signals to obtain range-Doppler two-dimensional data;
calculating, according to the range-Doppler two-dimensional data, a plurality of probabilities of Doppler spectrums corresponding to transmitting channel orders of at least two targets under different aliasing combinations; and
determining a Doppler spectrum of each of the at least two targets according to an aliasing combination corresponding to a maximum probability among the plurality of probabilities.

13. A radio device, comprising:

   a carrier;
   the integrated circuit of claim 12, provided on the carrier; and
   at least one antenna disposed on the carrier, or wherein the at least one antenna and the integrated circuit are integrated into an integrated device disposed on the carrier;
   wherein the integrated circuit is connected with the at least one antenna for transmitting detection signals and/or receiving echo signals.

14. A terminal device, comprising:

   a device body; and
   the radio device of claim 13, disposed on the device body;
   wherein the radio device is used for target detection to provide reference information for operation of the device body.

FIG. 1

FIG.2

FIG. 3

FIG. 4A

FIG. 4B

FIG. 4C

| | |
|---|---|
| Transmit detection signals through multiple transmitting channels in a doppler division multiplexing mode | 501 |
| Perform signal processing on echo signals to obtain range-Doppler two-dimensional data | 502 |
| calculate a plurality of probabilities of Doppler spectrums corresponding to transmitting channel orders of at least two targets under different aliasing combinations according to the range-Doppler two-dimensional data | 503 |
| Determine a Doppler spectrum of each of the at least two targets according to an aliasing combination corresponding to a maximum probability among the plurality of probabilities | 504 |

FIG. 5

FIG. 6

FIG. 7

801

processor

802

memory

FIG. 8

901

radio frequency module

902

analog signal processing module

903

digital signal processing module

FIG. 9

**TRANSLATION**

## INTERNATIONAL SEARCH REPORT

| International application No. |
| --- |
| **PCT/CN2023/143609** |

| A. CLASSIFICATION OF SUBJECT MATTER |
| --- |
| G01S 7/41(2006.01)i; G01S 13/02(2006.01)i; G06F 17/16(2006.01)i; G06F 17/18(2006.01)i |
| According to International Patent Classification (IPC) or to both national classification and IPC |

| B. FIELDS SEARCHED |
| --- |
| Minimum documentation searched (classification system followed by classification symbols)<br>IPC:G01S G06F |
| Documentation searched other than minimum documentation to the extent that such documents are included in the fields searched |
| Electronic data base consulted during the international search (name of data base and, where practicable, search terms used)<br>CNABS, CNTXT, CNKI, VEN, ENTXT, ENTXTC, IEEE: 加特兰微电子科技, 雷达, 距离, 多普勒, 复用, 通道, 混叠, 叠加, 交叠, 傅里叶, 子带, 最小二乘, 能量, 矩阵, radar, rang, doppler, multiplex+, channel, FFT, least square, energy, matrix |

| C. DOCUMENTS CONSIDERED TO BE RELEVANT | | |
| --- | --- | --- |
| Category* | Citation of document, with indication, where appropriate, of the relevant passages | Relevant to claim No. |
| Y | CN 111257846 A (CALTERAH SEMICONDUCTOR TECHNOLOGY (SHANGHAI) CO., LTD.) 09 June 2020 (2020-06-09)<br>description, paragraphs [0006]-[0268], and figures 1-13 | 1, 10-14 |
| Y | CN 103576129 A (INSTITUTE OF ELECTRONICS, CHINESE ACADEMY OF SCIENCES) 12 February 2014 (2014-02-12)<br>description, paragraphs [0073]-[0151], and figures 1-10 | 1, 10-14 |
| A | CN 106707258 A (UNIVERSITY OF ELECTRONIC SCIENCE AND TECHNOLOGY OF CHINA) 24 May 2017 (2017-05-24)<br>entire document | 1-14 |
| A | CN 115685080 A (BEIJING INSTITUTE OF TECHNOLOGY et al.) 03 February 2023 (2023-02-03)<br>entire document | 1-14 |
| A | WO 2021258292 A1 (HUAWEI TECHNOLOGIES CO., LTD.) 30 December 2021 (2021-12-30)<br>entire document | 1-14 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 May 2024** | **23 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/143609**

| Patent document cited in search report | | | Publication date (day/month/year) | Patent family member(s) | | | Publication date (day/month/year) |
|---|---|---|---|---|---|---|---|
| CN | 111257846 | A | 09 June 2020 | None | | | |
| CN | 103576129 | A | 12 February 2014 | CN | 103576129 | B | 09 March 2016 |
| CN | 106707258 | A | 24 May 2017 | None | | | |
| CN | 115685080 | A | 03 February 2023 | None | | | |
| WO | 2021258292 | A1 | 30 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311444850